# EUROPÄISCHE PATENTSCHRIFT

(11) **EP 0 754 428 B1**
(45) Veröffentlichungstag und Bekanntmachung des Hinweises auf die Patenterteilung: **06.10.1999**
(21) Anmeldenummer: 96111322.2
(22) Anmeldetag: 13.07.1996
(51) Int. Cl.: A47L 9/19, G09F 19/10

(54) **Verfahren zur Sichtbarmachung von durch einen Staubsauger aufgenommenen Staub**
Method of visualization of dust picked up by a vacuum cleaner
Procédé pour la visualisation de poussières ramassées par un aspirateur

(30) Priorität: 15.07.1995 DE 19525894
(43) Veröffentlichungstag der Anmeldung: 22.01.1997
(73) Patentinhaber: VORWERK & CO. INTERHOLDING GmbH, 42275 Wuppertal (DE)
(72) Erfinder: Delgado, Antonio, 85354 Freising (DE); Thode, Jürgen, 42489 Wülfrath (DE)
(74) Vertreter: Müller, Enno, Dipl.-Ing.

(56) Entgegenhaltungen:
- DE-C- 646 172
- US-A- 2 228 371
- US-A- 2 269 483
- US-A- 2 335 885
- US-A- 2 467 652
- US-A- 2 910 717

## Beschreibung

Die Erfindung betrifft ein Verfahren zur Sichtbarmachung von durch einen Staubsauger aufgenommenen Staub, wobei der Staubsauger einen Förderkanal aufweist, in welchen die aufgenommenen Staubpartikel in einem Luftstrom befördert werden und durch eine Lichtbeaufschlagung in einem zumindest teilweise lichtdurchlässigen Abschnitt des Förderkanals sichtbar gemacht werden.

Derartige verfahren sind aus dem Stand der Technik bekannt.

So zeigt z.B. die US-A-2 269 483 ein Verfahren, bei dem die Staubpartikel in einem durch ein Schauglas abgedeckten aufgeweiteten Bereich des Förderkanals sichtbar gemacht werden. Das ist jedoch nur bei guten Lichtverhältnissen möglich, da bei diesem vorbekannten Verfahren keine separate künstliche Lichtquelle zur Beleuchtung der Staubpartikel eingesetzt wird.

Allerdings ist aus der US-A-2 228 371 ein Verfahren bekannt, bei dem aus der Luft aufgenommener Staub in einem Luftreiniger ebenfalls in lichtdurchlässigen Förderkanälen sichtbar gemacht wird, wobei hier die Förderkanäle durch Lämpchen erleuchtet werden. Aber auch diese Lämpchen, die in erster Linie als Widerstände für den Gebläsemotor dienen sollen, haben infolge ihres reinen Auflichtcharakters nicht die gewünschte Wirkung. Daher sind in den Förderkanälen zur Sichtbarmachung der Strömung zusätzlich noch Fähnchen vonnöten.

Der Erfindung liegt daher die Aufgabe zugrunde, ein Verfahren zur Sichtbarmachung von durch einen Staubsauger aufgenommenen Staub verbessert auszugestalten derart, daß dem Benutzer bereits während des Saugvorganges Informationen über die Güte der Staubaufnahme und deren zeitliche Änderung vermittelt wird.

Die Aufgabe ist gemäß dem Gegenstand des unabhängigen Anspruchs 1 dadurch gelöst, daß die Bewegung der sichtbar gemachten Staubpartikel auf eine Projektionswand projiziert wird. Dies beispielsweise nach Art eines Diaprojektors. Es ergibt sich die Projizierung eines Bildes - beispielsweise über Umlenkung durch einen Spiegel - an eine Wand. Die Bewegung der sichtbar gemachten Staubpartikel ist somit verbessert wahrzunehmen, dies bedingt durch den Vergrößerungseffekt bei der Projizierung auf eine Projektionswand.

Durch die Lichtbeaufschlagung kann der Benutzer somit die bevorzugt helleuchtenden Staub- bzw. Schmutzpartikel während des Absaugvorganges im Bereich der Lichtbeaufschlagung verfolgen und bekommt somit Informationen über die Güte der Staubaufnahme und auch über deren zeitliche Änderung. Hierbei wird weiter vorgeschlagen, daß die Staubpartikel vor der Lichtbeaufschlagung konzentriert werden. Die Sichtbarmachung des geförderten Staubes erfolgt somit nicht über den gesamten Querschnitt des Förderkanals, sondern vielmehr in konzentrierter Form lediglich in einem Teilbereich des Querschnitts. Bedingt durch diese Ausgestaltung ist eine Veränderung der Staubaufnahme besser ablesbar. In einer weiteren Ausgestaltung wird vorgeschlagen, daß die Staubpartikel vor der Lichtbeaufschlagung strömungsmäßig verlangsamt werden. Dies ebenfalls zur Verstärkung des Effektes der Sichtbarmachung.

Die Erfindung betrifftt des weiteren einen Staubsauger mit einem Sauggebläse und einem Förderkanal für Staub, wobei der Förderkanal teilweise eine lichtdurchlässige Wandung zur Sichtbarmachung des aufgenommenen Staubes aufweist.

Hier wird zur verbesserten Vermittlung von Informationen über die Güte der Staufaufnahme und deren zeitliche Änderung vorgeschlagen, daß zugeordnet zur lichtdurchlässigen Wandung des Förderkanals eine Lichtquelle zur Durchleuchtung des Förderkanals in einem Durchleuchtungsbereich, im wesentlichen rechtwinklig ausgerichtet zu einer Förderrichtung vorgesehen ist. Die während des Saugvorganges geförderten Staubpartikel werden in einem Durchleuchtungsbereich mittels einer Lichtquelle angestrahlt, welche bevorzugt im wesentlichen rechtwinklig zur Förderrichtung der Staubpartikel ausgerichtet ist. Hierzu weist der Förderkanal im Durchleuchtungsbereich eine lichtdurchlässige Wandung auf, zum Anleuchten der durch diesen Bereich geförderten Staubpartikel. Es kann hierzu vorgesehen sein, daß der Durchleuchtungsbereich eine Strömungserweiterung aufweist. Letztere kann dadurch gebildet sein, daß der Durchmesser des Saugkanals im Durchleuchtungsbereich um ein vielfaches vergrößert ist. Bedingt durch diese Ausgestaltung werden die Staubpartikel bevorzugt vor der Lichtbeaufschlagung strömungsmäßig verlangsamt. In einer vorteilhaften Weiterbildung wird vorgeschlagen, daß vor dem Durchleuchtungsbereich ein Strömungsumlenker im Sinne einer Spiralströmung ausgebildet ist. Hierdurch wird die üblicherweise geradlinige Strömung in eine Spiralströmung umgelenkt, dies ebenfalls zur verbesserten Visualisierung der Staubaufnahme. Bevorzugt wird hierbei eine Ausgestaltung, bei welcher der Durchleuchtungsbereich einem Abschnitt der Spiralströmung zugeordnet ist. In einer bevorzugten Ausgestaltung des Erfindungsgegenstandes ist vorgesehen, daß die Strömungsumlenkung als ein vergleichsweise flacher, im wesentlichen kreisscheibenförmiger Hohlraum ausgebildet ist, wobei eine Einströmung in Ebenenerstreckung des Hohlraumes und eine Abströmung etwa senkrecht zu der Einströmung, im wesentlichen zentral zu dem Hohlraum erfolgt. Ein derartig gebildeter kreisscheibenförmiger Hohlraum weist bevorzugt einen Durchmesser auf, welcher einem mehrfachen des Durchmessers des Förderkanals entspricht. Bevorzugt wird hierbei eine Ausgestaltung, bei welcher der Durchmesser des Hohlraumes etwa dem dreifachen Durchmesser des Förderkanals entspricht. Bedingt durch diese Ausgestaltung ist die bereits zuvor erwähnte Strömungserweiterung realisiert. Durch die vergleichsweise flache Ausgestaltung des Hohlraumes wird eine Konzentrierung der mit Licht zu beaufschlagenden Staubpartikel erreicht. In einer weiteren Ausgestaltung ist vorgesehen, daß der kreisscheibenförmige Hohlraum während des Saugvorganges zur Sichtbarmachung des durch diesen geförderten Staubes im wesentlichen waagerecht ausgerichtet ist. Die Einströmung erfolgt in einer Ebenenerstreckung des Hohlraumes, d. h. seitlich der gebildeten Kreisscheibenform. Die Abströmung erfolgt hingegen etwa senkrecht zu der Einströmung, d. h. an einer Breitseite des Hohlraumes. Hier wird bevorzugt, daß eine entsprechende Abströmöffnung im wesentlichen zentral an einer Breitseite des Hohlraumes angeordnet ist. In einer vorteilhaften Weiterbildung des Erfindungsgegenstandes ist einströmseitig ein Strömungsabweiser derart vorgesehen ist, daß eine kreis- oder spiralförmige Strömung in dem scheibenförmigen Hohlraum ausgeprägt wird. Die in einer Ebenenerstreckung des Hohlraumes angeordnete Einströmöffnung weist demnach einen entsprechend ausgebildeten Strömungsabweiser auf. Letzterer ist derart ausgebildet, daß sich die Strömung bzw. die in dem Luftstrom geförderten Staubpartikel kreis- oder spiralförmig durch den scheibenförmigen Hohlraum in Richtung auf eine Abströmöffnung bewegen. Bedingt durch die zuvor genannten Ausgestaltungen wird eine verbesserte Sichtbarmachung des durch den Luftstrom transportierten Staubes erzielt. Dem Benutzer werden somit in vorteilhafter Weise Informationen über die Güte der Staubaufnahme und deren zeitliche Änderungen vermittelt. Um diesen optischen Effekt noch weiterhin zu verstärken, wird in einer vorteilhaften Weiterbildung vorgeschlagen, daß einseitig, zugeordnet einer Breitseite des Hohlraumes, eine Lichtquelle angeordnet ist und anderseitig eine Linseneinrichtung vorgesehen ist, zur Verstärkung bzw. Focusierung des Lichtes. Sowohl Lichtquelle als auch die Linseneinrichtung sind hierbei im Durchleuchtungsbereich des Förderkanals bzw. des kreisscheibenförmigen Hohlraumes positioniert. Der scheibenförmige Hohlraum kann hierzu bspw. im Durchleuchtungsbereich an seinen Breitseiten mit jeweils einem Glas- oder Kunststoff-Fenster versehen sein. Die an einer Breitseite des Hohlraumes angeordnete Lichtquelle durchleuchtet diesen Bereich und strahlt die durch diesen Bereich innerhalb des Hohlraumes durchtretenden Staubpartikel an, womit letztere hell aufleuchten. Dieses Anleuchten der transportierten Staubpartikel erfolgt bevorzugt, wie bereits erwähnt, im Bereich der Kreis- oder Spiralströmung. Die der Lichtquelle gegenüberliegende Linseneinrichtung verstärkt bzw. focusiert das Licht, womit ein Lupeneffekt erzielt wird zur verbesserten Sichtbarmachung der durch den Hohlraum transportierten Staubpartikel. Dieser Effekt kann sich zunutze gemacht werden, indem weiterhin ein Spiegel vorgesehen ist zur Projezierung des Lichtstrahles auf eine Projektionsfläche. Hier wird nach Art eines Dia-Projektors das Bild der angeleuchteten Staubpartikel über eine Umlenkung durch den Spiegel an eine Projektionsfläche geworfen. Die Projektionsfläche kann hierbei bspw. eine übliche Zimmerwand sein. Bedingt dadurch, daß eine Lichtquelle vorgesehen ist, ist auch eine Sichtbarmachung bei üblichem Tageslicht gegeben. Die Staubaufnahme bzw. deren Güte und die zeitliche Änderung der Staubaufnahme kann in bequemer Weise vermittels des auf die Projektionsfläche projezierten, stark vergrößerten Bildes verfolgt werden. Bevorzugt wird hierbei eine starke Lichtquelle eingesetzt, bspw. eine Leuchte mit 250 Watt Leistung. Da letztere während des Betriebs eine entsprechend starke Hitze entwickelt, wird vorgeschlagen, daß in dem Förderkanal eine Nebenluftöffnung vorgesehen ist zur Ansaugung von Außenluft über die Lichtquelle zu deren Kühlung. Hierzu kann bspw. ein Nebenkanal vorgesehen sein, welcher einerends an die Nebenluftöffnung des Förderkanals und andererends an ein Gehäuse der Lichtquelle angeschlossen ist. Bedingt durch den in dem Förderkanal herrschenden Unterdruck wird über die Nebenluftleitung durch das Gehäuse der Lichtquelle Nebenluft angesaugt, welche bei der Durchströmung des Leuchtengehäuses die Lichtquelle kühlt. In einer bevorzugten Ausgestaltung des Erfindungsgegenstandes ist vorgesehen, daß der Durchleuchtungsbereich im wesentlichen den üblichen Abmessungen des Förderkanals entspricht. Hier kann also eine Sichtbarmachung des aufgenommenen Staubes direkt im Bereich des Förderkanals erfolgen, ohne diesen in seinem Durchmesser zu erweitern. Hierdurch bedingt kann eine derartige Einrichtung auch als festes Bestandteil eines Staubsaugers realisiert sein, da die Abmessungen des Durchleuchtungsbereiches sich nicht im wesentlichen von denen des üblichen Förderkanales unterscheiden. Der Durchleuchtungsbereich wirkt dementsprechend nicht störend. Zur Erzielung einer verbesserten Sichtbarmachung wird vorgeschlagen, daß vorgeordnet zu dem Durchleuchtungsbereich eine Blende zur Konzentrierung des Staubes angeordnet ist. Mit Hilfe einer derartigen Blende, bspw. einer Schlitzblende, wird der Volumenstrom des Luft-Schmutz-Gemisches begrenzt und im Durchleuchtungsbereich zur Sichtbarmachung konzentriert. In einer vorteilhaften Weiterbildung ist vorgesehen, daß die Förderkanalwandung zum Teil als ein Fenster ausgebildet ist, zur unmittelbaren Betrachtung des durch den Förderkanal geförderten Staubes. Mit Hilfe eines derartig ausgebildeten Beobachtungsfensters besitzt der Benutzer die Möglichkeit, die durch den Durchleuchtungsbereich transportierten Staubpartikel zu verfolgen. Als besonders vorteilhaft erweist sich eine dem Förderkanal zugeordnete Aufnahme für eine Lichtquelle. Vermittels letzterer werden die durch den Durchleuchtungsbereich transportierten Staubpartikel hell angeleuchtet zur verbesserten Sichtbarmachung. Die so hell leuchtenden Partikel können gut durch den Benutzer durch das Beobachtungsfenster verfolgt werden. Bevorzugt wird hierbei eine Ausgestaltung, bei welcher die den Förderkanal zugeordnete Aufnahme für die Lichtquelle parallel zu dem Förderkanal angeordnet ist, womit entsprechend eine seitliche Ausleuchtung bzw. Durchleuchtung erfolgt. Der Lichtstrahl trifft, wie auch in der zuvor genannten Ausführung, senkrecht auf den Luft-Partikel-Strom. Die Anordnung von Lichtquelle und Beobachtungsfenster kann hierbei so gewählt sein, daß diese sich gegenüberliegen, womit ein Durchleuchten, ausgehend von der Lichtquelle, den Förderkanal durchtretend zum Beobachtungsfenster hin erfolgt. Auch hier wird bevorzugt eine starke Lampe, bspw. eine Halogenlampe mit 250 Watt Leistung eingesetzt. Da jedoch hierbei der Benutzer durch das Beobachtungsfenster im wesentlichen direkt in die Lichtquelle schaut, wird bevorzugt eine Ausgestaltung gewählt, bei welcher die Lichtquelle und das Beobachtungsfenster in einem Winkel von etwa 90° zueinander versetzt angeordnet sind. Somit erfolgt eine Beobachtung durch das Fenster senkrecht zum Lichtstrahl, womit eine Blendung des Benutzers weitestgehend ausgeschlossen ist. Die hell leuchtenden Schmutzpartikel können somit gut durch das Fenster beobachtet werden. Bei dieser Ausführungsform erfolgt lediglich eine Durchleuchtung des Förderkanals, wobei eine Beobachtung senkrecht hierzu erfolgt. Zur verbesserten Ausleuchtung des betreffenden Förderkanalabschnittes ist vorgesehen, daß die Aufnahme teilweise, im Bereich des Fensters, zum Förderkanal hin geöffnet ist. Hieraus ergibt sich eine Vorrichtung zur Begrenzung des Beleuchtungswinkels, welcher so bemessen ist, daß in etwa lediglich der Bereich des Beobachtungsfensters ausgeleuchtet ist. Weiterhin wird vorgeschlagen, daß die Aufnahme mindestens eine Ansaugöffnung aufweist zur Ansaugung von Außenluft zur Kühlung der Lichtquelle. Wie bereits erwähnt, wird auch hier bevorzugt eine sehr starke Lichtquelle eingesetzt, welche entsprechend eine starke Hitze entwickelt. Zur Kühlung sind entsprechende Ansaugöffnungen in der Aufnahme vorgesehen. Durch letztere wird Außenluft angesogen, dies bedingt durch den im Förderkanal herrschenden Unterdruck. Schließlich ist zur Verbesserung der Sichtbarmachung noch vorgesehen, daß der Förderkanal in dem Durchleuchtungsbereich geschwärzt ist. Somit können die hell leuchtenden Schmutzpartikel sehr leicht durch das Beobachtungsfenster verfolgt werden.

Die Erfindung ist nachstehend anhand zweier zeichnerisch veranschaulichter Ausführungsbeispiele näher erläutert. Es zeigt:
- Fig. 1: eine Seitenansicht eines Staubsaugers mit einer Vorrichtung zur Sichtbarmachung von durch den Staubsauger aufgenommenen Staub, eine erste Ausführungsform betreffend,
- Fig. 2: eine schematische Darstellung der Vorrichtung in einer Perspektive,
- Fig. 3: die Vorrichtung gemäß Fig. 2 in einer Seitenansicht,
- Fig. 4: die Draufsicht auf die Vorrichtung,
- Fig. 5: den Schnitt gemäß der Linie V-V in Fig. 4,
- Fig. 6: eine zweite Ausführungsform der Vorrichtung zur Sichtbarmachung von aufgenommenem Staub, in einer perspektivischen Einzeldarstellung,
- Fig. 7: ein Anordnungsbeispiel der Vorrichtung gemäß Fig. 6 an einem als Bodengerät konzipierten Staubsauger,
- Fig. 8: eine weitere Darstellung der Anordnung der Vorrichtung gemäß Fig. 6, hier jedoch an einem als Handgerät konzipierten Staubsauger,
- Fig. 9: eine alternative Positionierung der Vorrichtung an dem Staubsauger gemäß Fig. 8,
- Fig. 10: eine weitere perspektivische Darstellung der Vorrichtung gemäß Fig. 6, jedoch zur Verdeutlichung des Aufbaues aufgetrennt und
- Fig. 11: den Schnitt durch die Vorrichtung gemäß der Linie XI-XI in Fig. 10.

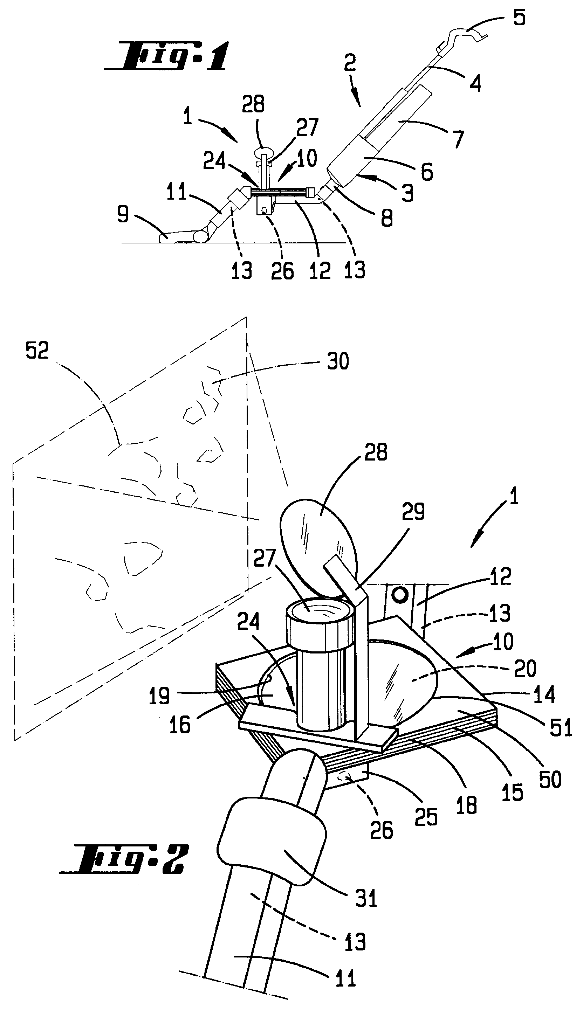

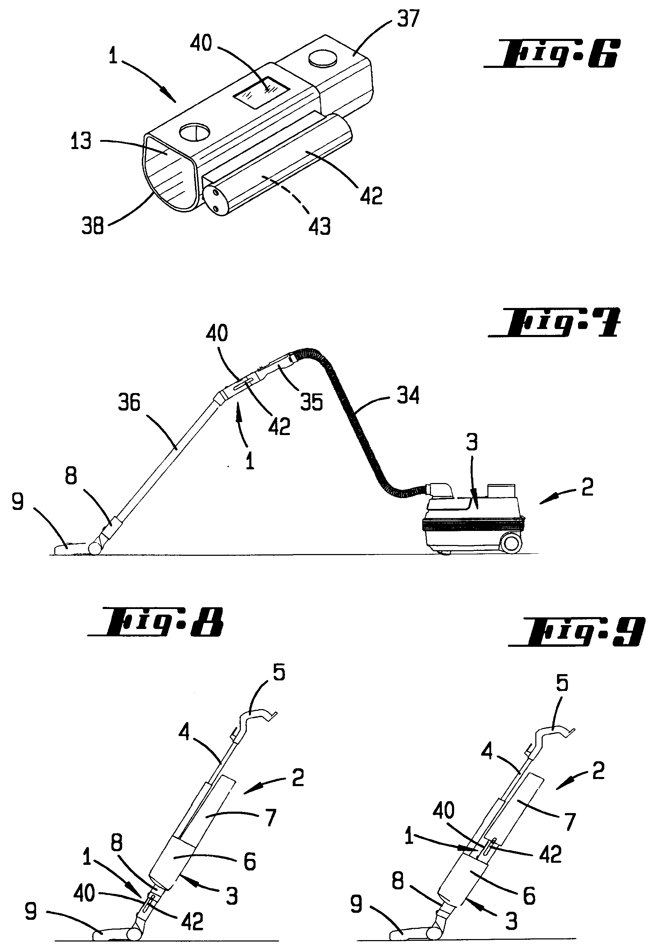

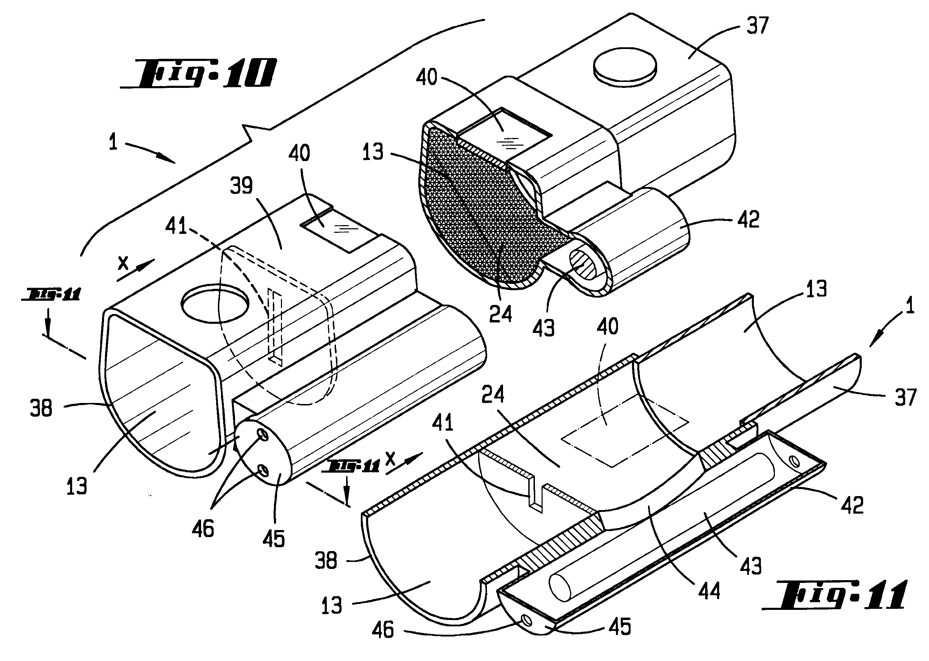

In den Fig. 1 bis 5 ist eine erste Ausführungsform einer Vorrichtung 1 zur Sichtbarmachung von durch einen Staubsauger aufgenommenen Staub dargestellt.

Der in der Fig. 1 die Vorrichtung 1 aufnehmende Elektro-Staubsauger 2 ist als Handgerät konzipiert. Dieser Staubsauger 2 besitzt ein Gehäuse 3, an das sich oben ein Stiel 4 anschließt mit endseitigem Griff 5.

Das Gehäuse 3 ist unterteilt in ein Motorgehäuse 6 und eine sich darüber erstreckende Kammer 7 zur Aufnahme eines nicht dargestellten Staubfilterbeutels. Das Motorgebläse ist zeichnerisch im einzelnen nicht wiedergegeben.

Die dem Motorgehäuse 6 zugekehrte Seite der Kammer 7 steht in Betriebsstellung des Staubsaugers 2 gemäß Fig. 1 in Stutzen-Anschlußverbindung zu einem Gebläse-Luftkanal des Motorgebläses.

Das Motorgehäuse 6 geht unterseitig in eine Rohrkupplung 8 über, welche üblicherweise den Luftströmungsanschluß zu einer Saugdüse 9 herstellt.

Im Bereich zwischen der Rohrkupplung 8 und der Saugdüse 9 ist die bereits erwähnte Vorrichtung 1 zwischengeschaltet, womit letztere den Luftströmungsanschluß zwischen Saugdüse 9 und dem Staubsauger 2 herstellt.

Die Vorrichtung 1 setzt sich im wesentlichen aus einer Beleuchtungs-/Projektionseinheit 10 und zwei an dieser Einheit 10 angeordneten Rohrkupplungen 11 und 12, zum Anschluß der Vorrichtung 1 an den Staubsauger 2 bzw. an die Ansaugdüse 9 zusammen.

Die Abmessungen der Rohrkupplungen 11 und 12 sind zumindest in den jeweiligen Endbereichen den üblichen Abmessungen im Bereich der Rohrkupplung 8 bzw. der Saugdüse 9 gewählt. Der bei einem üblichen Betrieb des Staubsaugers 2 durch die Saugdüse 9 und die Rohrkupplung 8 gebildete Förderkanal 13 wird bei einer Zwischenschaltung der Vorrichtung 1 durch die erwähnten Rohrkupplungen 11 und 12 und durch die Beleuchtungs-/Projektionseinheit 10 weiter gebildet. Es kann somit also auch bei Einsatz der Vorrichtung 1 ein übliches Absaugen erfolgen.

Die Beleuchtungs-/Projektionseinheit 10 weist einen Objekttisch 14 auf, welcher einen hohl ausgebildeten, flachen und im wesentlichen scheibenförmigen Objektträger 15 beinhaltet.

Im einzelnen ist dies so gelöst, daß der Objektträger 15 aus zwei in etwa im Grundriß quadratrischen, transparenten Kunststoffplatten 16 und 17 besteht, welche parallel zueinander ausgerichtet sind. Diese beiden Platten 16 und 17 weisen einen Abstand zueinander auf, wobei dieser Abstand durch eine, im Ausführungsbeispiel ebenfalls transparante Kunststoff-Zwischeneinlage 18 gebildet ist. Letztere weist zentral eine kreisförmige Durchbrechung 19 auf, deren Durchmesser etwas geringer ist als die Länge einer Breitseite der Zwischeneinlage 18 bzw. einer jeden Kunststoffplatte 16 oder 17.

Im Bereich dieser Durchbrechung 19, welche ober- und unterseitig durch die Platten 16 und 17 geschlossen ist, ist ein vergleichsweise flacher, kreisscheibenförmiger Hohlraum 20 gebildet. Die Höhe dieses Hohlraumes 20 ist hierbei so bemessen, daß diese etwa einem Drittel des Durchmessers des Förderkanals 13 entspricht. Der Durchmesser des Hohlraumes 20 hingegen weist ein Mehrfaches des Förderkanaldurchmessers auf. Im gezeigten Ausführungsbeispiel etwa das Dreifache.

Zum Schutz von mechanischr Beanspruchung ist die transparente Platte 16 oberseitig und die Platte 17 unterseitig jeweils mit einer Metallplatte 50 abgedeckt, wobei diese jeweils eine zentrale, kreisrunde Durchbrechung 51 aufweisen Der Durchmesser dieser Durchbrechungen 51 entspricht etwa dem der Zwischeneinlage-Durchbrechung 19. Es ist somit ein Fenster zur Betrachtung des sich durch den Hohlraum 20 bewegenden Staubes gegeben.

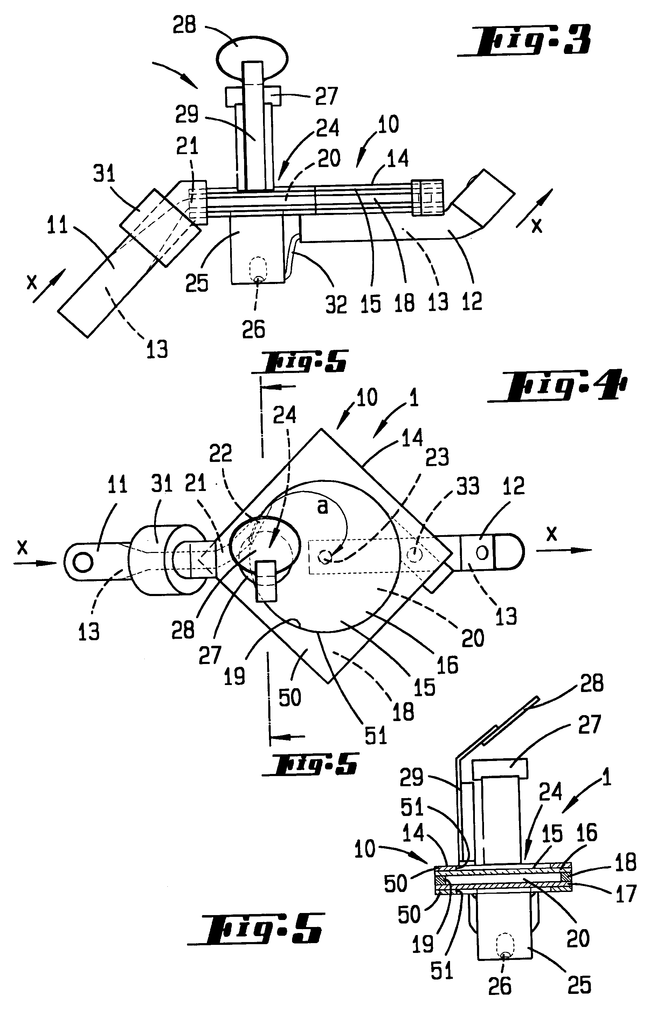

Wie bereits erwähnt, ist der so gebildete Objekttisch 14 im Grundriß quadratisch ausgebildet. Die Ausrichtung des Objekttisches 14 zu den zugehörigen Rohrkupplungen 11 und 12 ist so gewählt, daß eine Förderkanalachse den Objekttisch 14 im Bereich zweier sich gegenüberliegender Spitzen seines Grundrisses schneidet. Die Seitenkanten des Objekttisches 14 sind demnach um 45° zu der Förderkanalachse versetzt angeordnet (vgl. Fig. 4).

Einströmseitig ist der Einheit 10 bzw. dem Objekttisch 14 die Rohrkupplung 11 zugeordnet, wobei letztere im Bereich des Objekttisches 14 diesen in dem angesprochenen Eckbereich einfängt. Der in der Rohrkupplung 11 vorgesehene Förderkanal 13 setzt sich in dem Hohlraum 20 des Objekttisches 14 fort, wozu hier im Übergang von Rohrkupplung 11 zu Objekttisch 14 eine Einströmöffnung 21 vorgesehen ist. Letztere durchsetzt die Zwischeneinlage 18 vom Anschlußbereich zur Rohrkupplung 11 bis in den Hohlraum 20 hinein.

Die Anordnung der Rohrkupplung 11 ist hierbei so gewählt, daß diese zu dem Objekttisch 14 einen Winkel von 45° einschließt, wobei die Rohrkupplung 11 gemäß Fig. 3 nach unten geneigt ist.

Die Einströmöffnung 21 ist des weiteren so ausgebildet, daß diese in etwa tangential in den Hohlraum 20 eintritt, zur Bildung einer weichen Einleitung des Saugstromes in den Hohlraum 20.

Zur Erzielung von kreis- oder spiralförmigen Strömungen in dem scheibenförmigen Hohlraum 20 ist im Bereich des Eintrittes der Einströmöffnung 21 in den Hohlraum 20 ein Strömungsabweiser 22 vorgesehen (vgl. hierzu Fig. 4).

Die Rohrkupplung 12, über welche die Absaugung mittels des an dieser angeschlossenen Staubsaugers 2 erfolgt, erstreckt sich zumindest teilweise unterseitig des Objekttisches 14, wozu hier zentral von dem Hohlraum 20 ausgehend eine Abströmöffnung 23 die untere Kunststoffplatte 17 durchtritt. Diese Abströmöffnung 23 steht in Verbindung mit dem Förderkanal 13 der Rohrkupplung 12. Letztere erstreckt sich in optischer Verlängerung zu der Einströmkupplung 11 über den Objekttisch 14 hinaus, wobei ein freier Endbereich der Rohrkupplung 12 zu dem Tisch 14 einen Winkel von 45° einschließt, wobei dieser Endbereich gemäß Fig. 3 nach oben geneigt ist zum Anschluß an den Staubsauger 2.

Bedingt durch die zuvor beschriebene Ausgestaltung erfolgt eine Einströmung in Ebenenerstreckung des Hohlraumes 20 und eine Abströmung etwa senkrecht zu der Einströmung. Durch die gewählte Ausbildung der Einströmöffnung 21 und dem in dem Hohlraum 20 angeordneten Strömungsabweiser 22 wird eine kreis- oder spiralförmige Strömung innerhalb des Hohlraumes 20 gebildet (siehe hierzu Pfeil a in Fig. 4).

Durch die flache Ausgestaltung des Hohlraumes 20 werden die durch den Hohlraum 20 transportierten Staubpartikel konzentriert, wobei bedingt durch den relativ großen Durchmesser des Hohlraumes 20 diese strömungsmäßig verlangsamt werden.

Die Vorrichtung 1 soll dem Benutzer bzw. bei einer Vorführung dem Interessenten Informationen über die Güte der Staubaufnahme und deren zeitliche Änderung vermitteln. Der mit dem Luftstrom aufgenommene Staub ist im Bereich des Objektträgers 15 sichtbar. Es werden also schon jetzt die gewünschten Informationen vermittelt.

Zur Erzielung einer verbesserten Visualisierung ist die Vorrichtung 1 in Art eines Dia-Projektors ausgebildet. Hierzu ist im Bereich der Einströmöffnung 21 ein Durchleuchtungsbereich 24 vorgesehen. Dieser ist einem Abschnitt der Spiralströmung zugeordnet.

Unterseitig des Objekttisches 14 ist eine in einem Gehäuse 25 angeordnete Lichtquelle 26 vorgesehen, deren Lichtstrahlen senkrecht zum Objekttisch 14 diesen bzw. den Objektträger 15 durchsetzen. Der Lichtquelle 26 gegenüberliegend ist oberhalb des Objekttisches 14 eine Linseneinrichtung 27 vorgesehen, zur Verstärkung bzw. Focusierung des durch den Objektträger 15 bzw. durch den Hohlraum 20 tretenden Lichtes.

Weiter ist über der Linseneinrichtung 27 schwebend ein Spiegel 28 vorgesehen, welcher über eine Halterung 29 mit dem Objekttisch 14 verbunden ist. Vermittels dieses Spiegels 28 ist eine Projezierung des Lichtstrahls auf eine Projektionsfläche 30 ermöglicht.

Die über den Förderkanal angesaugte Luft transportiert in bekannter Weise Staub- und Schmutzpartikel. Um bei einer eventuellen Vorführungen dem Benutzer bzw. Interessenten eine objektive Information über die Güte der Staubaufnahme und deren zeitliche Änderung vermitteln zu können, wird zwischen dem Staubsauger 2 und der Saugdüse 9 die zuvor im einzelnen beschriebene Vorrichtung 1 zwischengeschaltet, wobei in einer bevorzugten Arbeitsposition von 45° die Vorrichtung waagerecht ausgerichtet ist (vgl. Fig. 1).

Der Saugluftstrom gelangt über die Rohrkupplung 11 und die Einströmöffnung 21 in den Hohlraum 20, wobei hier vermittels des Strömungsabweisers 22 eine kreis- oder spiralförmige Strömung gebildet wird. Die Lichtquelle 26, welche bevorzugt eine Leuchte mit ca. 250 Watt Leistung ist, durchleuchtet den Bereich 24. Das Bild 52 der somit hell leuchtenden Schmutz- und Staubpartikel wird über die Linseneinrichtung 27 vergrößert und über den Spiegel 28 auf die Fläche 30 projeziert (vgl. Fig. 2).

Die Versorgung der Lichtquelle 26 erfolgt über einen Transformator 31.

Wie bereits erwähnt, ist die Leistung der Lichtquelle 26 relativ hoch, womit während des Betriebs eine entsprechend hohe Wärme erzielt wird. Zur Kühlung der Lichtquelle 26 ist eine Nebenluftleitung 32 vorgesehen, welche einerends mit dem Gehäuse 25 der Lichtquelle 26 und andererends mit der Abström-Rohrkupplung 12 in Verbindung steht. Hierzu besitzt die Rohrkupplung 12 eine entsprechende Nebenluftöffnung. Über die Nebenluftleitung 32 wird Außenluft durch das Gehäuse 25 gesogen, dies bedingt durch den in der Rohrkupplung 12 herrschenden Unterdruck. Die durch das Gehäuse 25 gesogene Außenluft dient hierbei zur Kühlung der Lichtquelle 26.

Um etwaigen Reststaub aus dem Hohlraum 20 nach einer Vorführung absaugen zu können, ist eine verschließbare Reinigungs-Absaugöffnung 33 vorgesehen.

Eine zweite Ausführungsform der Vorrichtung 1 ist in den Fig. 6-11 dargestellt. Diese Ausführungsform unterscheidet sich von der ersten im wesentlichen dadurch, daß deren Abmessungen im wesentlichen den üblichen Abmessungen des Förderkanals 13 bzw. der Rohrkupplungen entspricht. Somit kann diese Vorrichtung 1 in einfachster Weise als kompaktes Zwischenglied an geeigneten Stellen im Bereich des Förderkanals zwischengeschaltet werden. Die Fig. 7-9 zeigen verschiedene Einbaumöglichkeiten der Vorrichtung 1.

In Fig. 7 ist ein Staubsauger 2 dargestellt, welcher als Bodengerät konzipiert ist. Auch dieses Bodengerät besitzt ein Gehäuse 3, an welchem ein Absaugschlauch 34 angeschlossen ist. Endseitig des Schlauches 34 ist ein Handgriff 35 vorgesehen, an welchem wiederum ein Absaugrohr 36 anordbar ist. Letzteres weist endseitig eine Rohrkupplung 8 auf, welche den Luftströmunganschluß zu einer Saugdüse 9 herstellt.

Die Vorrichtung 1 zur Sichtbarmachung von durch den Staubsauger 2 aufgenommenen Staub ist in der Fig. 7 zwischen dem Handgriff 35 und dem Absaugrohr 36 geschaltet. Die Vorrichtung 1 weist hierzu in eine entsprechend ausgeformte Rohrkupplung 37 und eine dieser gegenüberliegende Kupplungsaufnahme 38 auf.

In den Fig. 8 und 9 ist die Anordnung der Vorrichtung 1 an einem als Handgerät konzipierten Staubsauger dargestellt. In Fig. 8 ist entsprechend der ersten Ausführungsform die Vorrichtung 1 zwischen der Saugdüse 9 und der Rohrkupplung 8 geschaltet.

In Fig. 9 ist alternativ die Anordnung der Vorrichtung 1 zwischen dem Gehäuse 2 und der Kammer 7, welche den Staubfilterbeutel beinhaltet, dargestellt.

Detailliert ist die Vorrichtung 1 in den Fig. 10 und 11 dargestellt. Der Querschnitt der Vorrichtung entspricht nahezu über die Gesamtlängserstreckung im wesentlichen dem des üblichen Förderkanals. Die Förderkanalwandung 39 der Vorrichtung 1 ist zum Teil als ein Fenster 40 ausgebildet, welches bevorzugt ein transparentes Kunststoffteil ist. Mit Bezug zu Fig. 10 kann durch dieses Fenster 40 von oben in den Förderkanal 13 der Vorrichtung 1 geblickt werden. In Saugrichtung x ist vorgelagert zu dem Fenster 40 im Bereich des Förderkanals 13 eine Blende 41 vorgesehen, welche in dem gezeigten Ausführungsbeispiel eine Schlitzblende ist. Hierdurch ergibt sich eine Konzentrierung des Luftstromes und dementsprechend auch des Staubes im Bereich des Fensters 40.

Senkrecht zu dem Fenster 40 ist außenseitig an der Vorrichtung 1 eine Aufnahme 42 vorgesehen, welche eine Lichtquelle 43 aufnimmt. Letztere ist in dem gezeigten Ausführungsbeispiel eine Halogen-Lampe mit 250 Watt Leistung. Die Aufnahme 42 erstreckt sich hierbei in Längsrichtung der Vorrichtung 1 und ist teilweise, im Bereich des Fensters 40, zum Förderkanal 13 hin geöffnet. Die hierdurch gebildete Lichtdurchtrittsöffnung 44 dient hierbei als Vorrichtung zur Begrenzung des Beleuchtungswinkels, womit in den Förderkanal 13 eintretendes Licht auf den interessierenden Bereich konzentriert wird. Das Fenster 40 liegt in einer Projektion in diesem beleuchteten Bereich.

Bedingt durch die senkrecht zueinander ausgerichtete Anordnung von Fenster 40 und Lichtquelle 43 erfolgt eine Beobachtung durch das Fenster 40 senkrecht zur Durchleuchtungserstreckung.

Um eine verbesserte Sichtbarkeit der durch den hinter der Blende 41 gebildeten Durchleuchtungsbereich 24 tretenden Staub- und Schmutzpartikel zu geben, ist der Förderkanal 13 in dem Durchleuchtungsbereich 24 bevorzugt geschwärzt. Dieser Bereich ist zur Verdeutlichung in der Fig. 10 schraffiert.

Da die relativ starke Lichtquelle 26 eine entsprechend hohe Wärme entwickelt, ist eine Kühlung der Lichtquelle 26 vorgesehen. Hierzu weist die Aufnahme 42 an ihrer entgegen der Strömungsrichtung x liegenden Stirnwand 45 zwei Ansaugöffnungen 46 auf. Über diese wird während des Betriebes Außenluft angesogen, welche die Aufnahme 42 durchströmt und hierbei die Lichtquelle 26 kühlt. Dies bedingt durch den in dem Förderkanal 13 herrschenden Unterdruck.

Das durch die Vorrichtung 1 hindurchtretende Luft-Schmutz-Gemisch wird mit Hilfe der starken Lichtquelle beleuchtet. Senkrecht zu dieser Beleuchtungseinrichtung besitzt der Beobachter mit Hilfe des Beobachtungsfensters 40 die Möglichkeit, die hell leuchtenden Schmutzpartikel vor dem dunklen Hintergrund zu verfolgen, wobei mit Hilfe der Blende 41 der Volumenstrom des Gemisches begrenzt und vor dem Beobachtungsfenster 40 konzentriert wird.

Es ist somit in einfachster Weise eine Vorrichtung geschaffen, welche dem Benutzer bereits während des Saugens Informationen über die Güte der Staubaufnahme und deren zeitliche Änderung vermittelt.

## Patentansprüche

1. Verfahren zur Sichtbarmachung von durch einen Staubsauger (2) aufgenommenen Staub, wobei der Staubsauger (2) einen Förderkanal (13) aufweist, in welchem die aufgenommenen Staubpartikel in einem Luftstrom befördert werden, und durch eine Lichtbeaufschlagung in einem zumindest teilweise lichtdurchlässigen Abschnitt des Förderkanals (13) sichtbar gemacht werden,
dadurch gekennzeichnet,
daß die Bewegung der sichtbar gemachten Staubpartikel auf eine Projektionswand (30) projiziert wird.

2. Verfahren nach Anspruch 1,
dadurch gekennzeichnet,
daß die Staubpartikel vor der Lichtbeaufschlagung konzentriert werden.

3. Verfahren nach einem oder mehreren der vorhergehenden Ansprüche,
dadurch gekennzeichnet,
daß die Staubpartikel vor der Lichtbeaufschlagung strömungsmäßig verlangsamt werden.

4. Staubsauger (2) mit einem Sauggebläse und einem Förderkanal (13) für Staub, wobei der Förderkanal (13) teilweise eine lichtdurchlässige Wandung zur Sichtbarmachung des aufgenommenen Staubes aufweist,
dadurch gekennzeichnet,
daß zugeordnet zur lichtdurchlässigen Wandung des Förderkanals (13) eine Lichtquelle (26,43) zur Durchleuchtung des Förderkanals (13) in einem Durchleuchtungsbereich (24), im wesentlichen rechtwinklig ausgerichtet zu einer Förderrichtung (x) vorgesehen ist.

5. Staubsauger nach Anspruch 4,
dadurch gekennzeichnet,
daß der Durchleuchtungsbereich (24) eine Strömungserweiterung aufweist.

6. Staubsauger nach einem der Ansprüche 4 oder 5,
dadurch gekennzeichnet,
daß vor dem Durchleuchtungsbereich (24) ein Strömungsumlenker im Sinne einer Spiralströmung ausgebildet ist.

7. Staubsauger nach Anspruch 6,
dadurch gekennzeichnet,
daß der Durchleuchtungsbereich (24) einem Abschnitt der Spiralströmung zugeordnet ist.

8. Staubsauger nach einem oder mehreren der Ansprüche 6 bis 7,
dadurch gekennzeichnet,
daß die Strömungsumlenkung als ein vergleichsweise flacher, im wesentlichen kreisscheibenförmiger Hohlraum (20) ausgebildet ist, wobei eine Einströmung in Ebenenerstreckung des Hohlraums (20) und eine Abströmung etwa senkrecht zu der Einströmung, im wesentlichen zentral zu dem Hohlraum (20) erfolgt.

9. Staubsauger nach Anspruch 8,
dadurch gekennzeichnet,
daß einströmseitig ein Strömungsabweiser (22) derart vorgesehen ist, daß eine kreis- oder spiralförmige Strömung in dem scheibenförmigen Hohlraum (20) ausgeprägt wird.

10. Staubsauger nach einem oder mehreren der Ansprüche 8 und 9,
dadurch gekennzeichnet,
daß einseitig, zugeordnet einer Breitseite des Hohlraums (20) eine Lichtquelle (26) angeordnet und andererseits eine Linseneinrichtung (27) vorgesehen ist, zur Verstärkung bzw. Fokussierung des Lichtes.

11. Staubsauger nach einem oder mehreren der vorhergehenden Ansprüche 4 bis 10,
dadurch gekennzeichnet,
daß ein Spiegel (28) vorgesehen ist zur Projizierung der sichtbar gemachten geförderten Staubpartikel auf eine Projektionsfläche (30).

12. Staubsauger nach einem oder mehreren der vorhergehenden Ansprüche 4 bis 11,
dadurch gekennzeichnet,
daß in dem Förderkanal (13) eine Nebenluftöffnung vorgesehen ist zur Ansaugung von Außenluft über die Lichtquelle (26) zu deren Kühlung.

13. Staubsauger nach einem oder mehreren der vorhergehenden Ansprüche 4 bis 12,
dadurch gekennzeichnet,
daß der Durchleuchtungsbereich (24) im wesentlichen den üblichen Abmessungen des Förderkanals (13) entspricht.

14. Staubsauger nach einem oder mehreren der vorhergehenden Ansprüche 4 bis 13,
dadurch gekennzeichnet,
daß vorgeordnet zu dem Durchleuchtungsbereich (24) eine Blende (41) zur Konzentrierung des Staubes angeordnet ist.

15. Staubsauger nach einem oder mehreren der vorhergehenden Ansprüche 4 bis 14,
dadurch gekennzeichnet,
daß die Förderkanalwandung (39) zum Teil als ein Fenster (40) ausgebildet ist, zur unmittelbaren Betrachtung des durch den Förderkanal (13) geförderten Staubes.

16. Staubsauger nach einem oder mehreren der vorhergehenden Ansprüche 4 bis 15,
gekennzeichnet durch
eine dem Förderkanal (13) zugeordnete Aufnahme (42) für eine Lichtquelle (43).

17. Staubsauger nach Anspruch 16,
dadurch gekennzeichnet,
daß die Aufnahme (42) teilweise, im Bereich des Fensters (40) zum Förderkanal (13) hin geöffnet ist.

18. Staubsauger nach einem der Ansprüche 16 oder 17,
dadurch gekennzeichnet,
daß die Aufnahme (42) mindestens eine Ansaugöffnung (46) aufweist, zur Ansaugung von Außenluft zur Kühlung der Lichtquelle (43).

19. Staubsauger nach einem oder mehreren der vorhergehenden Ansprüche 4 bis 18,
dadurch gekennzeichnet,
daß der Förderkanal (13) in dem Durchleuchtungsbereich (24) geschwärzt ist.

## Claims

1. Method for making visible dust taken up by a vacuum cleaner (2), the vacuum cleaner (2) having a delivery channel (13), in which the dust particles taken up are conveyed in a stream of air and are made visible by impingement of light in an at least partially transparent section of the delivery channel (13), characterised in that the movement of the dust particles made visible is projected onto a projection wall (30).

2. Method according to Claim 1, characterised in that the dust particles are concentrated before the impingement of the light.

3. Method according to one or more of the preceding claims, characterised in that the dust particles are slowed down in respect of their flow before the impingement of the light.

4. Vacuum cleaner (2) having a suction fan and a delivery channel (13) for dust, the delivery channel (13) having in part a transparent wall for making visible the dust taken up, characterised in that a light source (26, 43) for illumination of the delivery channel (13) is provided in an illumination region (24), the illumination region (24) being aligned substantially at right-angles to a delivery direction (x), and the light source being associated with the transparent wall of the delivery channel (13).

5. Vacuum cleaner according to Claim 4, characterised in that the illumination region (24) has a widening in the flow.

6. Vacuum cleaner according to one of Claims 4 or 5, characterised in that a flow diversion feature in the sense of a spiral flow is provided before the illumination region (24).

7. Vacuum cleaner according to Claim 6, characterised in that the illumination region (24) is associated with a portion of the spiral flow.

8. Vacuum cleaner according to one or more of Claims 6 to 7, characterised in that the flow diversion feature is provided as a comparatively flat cavity (20), which is substantially in the shape of a circular disc, inflow taking place in the plane of extent of the cavity (20) and outflow taking place substantially perpendicular to the inflow, substantially centrally with respect to the cavity (20).

9. Vacuum cleaner according to Claim 8, characterised in that a flow diverter (22) is provided in the inflow region in such a way that a circular or spiral flow is developed in the disc-shaped cavity (20).

10. Vacuum cleaner according to one or more of Claims 8 and 9, characterised in that a light source (26) associated with a large face of the cavity (20) is provided on one side and a lens arrangement (27) is provided on the other side in order to strengthen and focus the light.

11. Vacuum cleaner according to one or more of the preceding Claims 4 to 10, characterised in that a mirror (28) is provided for projection of the dust particles, which are conveyed and made visible, onto a projection surface (30).

12. Vacuum cleaner according to one or more of the preceding Claims 4 to 11, characterised in that an auxiliary air opening is provided in the delivery channel (13) for sucking in air from the outside over the light source (26) in order to cool the light source.

13. Vacuum cleaner according to one or more of the preceding Claims 4 to 12, characterised in that the illumination region (24) substantially equates to the conventional dimensions of the delivery channel (13).

14. Vacuum cleaner according to one or more of the preceding Claims 4 to 13, characterised in that an orifice (41) for concentrating the dust is located upstream of the illumination region (24).

15. Vacuum cleaner according to one or more of the preceding Claims 4 to 14, characterised in that the delivery channel wall (39) is provided in part as a window (40), for direct observation of the dust conveyed through the delivery channel (13).

16. Vacuum cleaner according to one or more of the preceding Claims 4 to 15, characterised by a receiver (42) for a light source (43), the receiver (42) being associated with the delivery channel (13).

17. Vacuum cleaner according to Claim 16, characterised in that the receiver (42) is partially open towards the delivery channel (13), in the region of the window (40).

18. Vacuum cleaner according to one of Claims 16 or 17, characterised in that the receiver (42) has at least one suction opening (46) for sucking in air from the outside for cooling the light source (43).

19. Vacuum cleaner according to one or more of the preceding Claims 4 to 18, characterised in that the delivery channel (13) is darkened in the illumination region (24).

## Revendications

1. Procédé pour rendre visibles les poussières captées par un aspirateur à poussières (2), l'aspirateur à poussières (2) présentant un canal de transport (13) dans lequel les particules de poussières captées sont véhiculées dans un flux d'air et rendues visibles par une exposition à une lumière, dans un tronçon, au moins partiellement transparent à la lumière, du canal de transport (13), caractérisé en ce que le déplacement des particules de poussières rendues visibles est projeté sur une paroi de projection (30).

2. Procédé selon la revendication 1, caractérisé en ce que les particules de poussières sont concentrées avant d'être exposées à la lumière.

3. Procédé selon l'une ou plusieurs des revendications précédentes, caractérisé en ce que le flux de particules de poussières est ralenti avant d'être exposé à la lumière.

4. Aspirateur à poussières (2) équipé d'une soufflante d'aspiration et d'un canal de transport (13) pour les poussières, le canal de transport (13) présentant en partie une paroi transparente à la lumière, pour rendre visible les poussières captée, caractérisé en ce qu'une source de lumière (26, 43) destinée à illuminer en volume le canal de transport (13) dans une zone d'illumination en volume (24) est prévue sensiblement orientée perpendiculairement à une direction de transport (x), en étant associée à la paroi transparente à la lumière du canal de transport (13).

5. Aspirateur à poussières selon la revendication 4, caractérisé en ce que la zone d'illumination en volume (24) présente un élargissement de l'écoulement.

6. Aspirateur à poussières selon l'une des revendications 4 ou 5, caractérisé en ce qu'un déviateur d'écoulement, au sens de production d'un écoulement spiral, est constitué avant la zone d'illumination en volume (24).

7. Aspirateur à poussières selon la revendication 5, caractérisé en ce que la zone d'illumination en volume (24) est associée à un tronçon de l'écoulement spiral.

8. Aspirateur à poussières selon l'une ou plusieurs des revendications 6 à 7, caractérisé en ce que la déviation d'écoulement est réalisée sous la forme d'un espace creux (20) relativement plat, ayant sensiblement une forme de disque circulaire, une introduction d'écoulement dans l'étendue plane de l'espace creux (20) étant effectuée et une évacuation de l'écoulement étant effectuée à peu près perpendiculairement à l'introduction de l'écoulement, sensiblement centralement par rapport à l'espace creux (20).

9. Aspirateur à poussières selon la revendication 8, caractérisé en ce que, côté entrée de l'écoulement, est prévu un déviateur d'écoulement (22), de manière qu'un écoulement en forme circulaire ou spirale soit imposé dans l'espace creux (20) en forme de disque.

10. Aspirateur à poussières selon l'une ou plusieurs des revendications 8 et 9, caractérisé en ce que, d'un côté, associé à un côté large de l'espace creux (20) est disposée une source de lumière (26) et, de l'autre côté, est prévu un dispositif lenticulaire (27), destiné à amplifier ou focaliser la lumière.

11. Aspirateur selon l'une ou plusieurs des revendications 4 à 10 précédentes, caractérisé en ce qu'est prévu un miroir (28) pour projeter l'image des particules de poussières véhiculées, rendues visibles, sur une surface de projection (30).

12. Aspirateur à poussières selon l'une ou plusieurs des revendications 4 à 11 précédentes, caractérisé en ce que dans le canal de transport (13) est prévue une ouverture d'air annexe, destinée à aspirer de l'air extérieur sur la source de lumière (26), en vue d'assurer son refroidissement.

13. Aspirateur à poussières selon l'une ou plusieurs des revendications 4 à 12 précédentes, caractérisé en ce que la zone d'illumination en volume (24) correspond essentiellement aux dimensions usuelles du canal de transport (13).

14. Aspirateur à poussières selon l'une ou plusieurs des revendications 4 à 13 précédentes, caractérisé en ce qu'en amont de la zone d'illumination en volume (24) est disposé un écran ou diaphragme (41), destiné à concentrer les poussières.

15. Aspirateur à poussières selon l'une ou plusieurs des revendications 4 à 14 précédentes, caractérisé en ce que la paroi de canal de transport (39) est constituée en partie sous la forme d'une fenêtre (40), afin d'observer directement les poussières véhiculées dans le canal de transport (13).

16. Aspirateur à poussières selon l'une ou plusieurs des revendications 4 à 15 précédentes, caractérisé par un logement (42) associé au canal de transport (13), pour une source de lumière (43).

17. Aspirateur à poussières selon la revendication 16, caractérisé en ce que le logement (42) est partiellement ouvert vers le canal de transport (13), dans la zone de la fenêtre (40).

18. Aspirateur à poussières selon l'une des revendications 16 ou 17, caractérisé en ce que le logement (42) présente au moins une ouverture d'aspiration (46) pour aspirer de l'extérieur afin de refroidir la source de lumière (43).

19. Aspirateur à poussières selon l'une ou plusieurs des revendications 4 à 18 précédentes, caractérisé en ce que le canal de transport (13) est noirci dans la zone d'éclairage en volume (24).
